# FASCICULE DE BREVET EUROPEEN

(11) **EP 4 373 743 B1**
(45) Date de publication et mention de la délivrance du brevet: **14.01.2026**
(21) Numéro de dépôt: 22757620.4
(22) Date de dépôt: 21.07.2022
(51) Int. Cl.: B64B 1/28, B64D 33/08

(54) **DIRIGEABLE A PROPULSION ELECTRIQUE.**
ELEKTRISCH ANGETRIEBENES LUFTSCHIFF
ELECTRICALLY POWERED AIRSHIP

(30) Priorité: 21.07.2021 FR 2107860
(43) Date de publication de la demande: 29.05.2024
(73) Titulaire: Flying Whales, 92150 Suresnes (FR)
(72) Inventeur: GUILLOU, Pierrot, 92150 SURESNES (FR); MAZZELLA, Aurélien, 92150 SURESNES (FR); TAILLARDAT, Clémence, 92150 SURESNES (FR)
(74) Mandataire: IP Trust
(86) Numéro de dépôt international: PCT/FR2022/051453
(87) Numéro de publication internationale: WO 2023/002132

(56) Documents cités:
- EP-A1- 3 056 423
- EP-A1- 3 133 266
- WO-A1-03/037715
- WO-A1-93/16280
- CN-A- 109 573 074
- DE-C1- 19 619 535
- US-A1- 2005 268 593

## Description

### DOMAINE DE L'INVENTION

Le domaine de l'invention est celui de dirigeables de structure rigide à propulsion électrique, conçus pour le transport de charges lourdes, et plus particulièrement celui du refroidissement et de la ventilation de systèmes de production d'énergie électrique et des équipements auxiliaires associés embarqués dans ces dirigeables.

### ETAT DE LA TECHNIQUE

Les dirigeables porteurs de charges lourdes ont la particularité, grâce à leur système de vol électronique et leur propulsion hybride distribuée ou tout électrique, de réaliser des vols stationnaires longs pour opérer l'échange de change, une difficulté spécifique apparaît. En effet, sur les anciens dirigeables les moteurs étaient directement reliés aux hélices pour la propulsion, il y avait donc toujours un débit d'air « frais » permettant l'évacuation des calories au travers des échangeurs a conduites forcées ou par convection naturelle.

Sur les dirigeables à propulsion électrique, les turbines, puis dans le futur les piles à combustible, ne servant qu'à produire la puissance primaire mécanique permettant au générateur électrique de produire l'électricité nécessaire à l'alimentation des équipements de bords (propulsion, levage, système de contrôle de vol) celle-ci n'est pas reliée à une hélice. Malgré le fait qu'elle « aspire » de l'air pour alimenter son cycle thermodynamique et créé donc un flux d'air « frais », il est fortement déconseillé de réaliser ce genre d'architecture pour deux raisons principales :
- La réglementation aérienne déconseille d'introduire des échangeurs contenant des fluides inflammables dans les conduites d'entrée d'air de la turbomachine, car en cas de fuites (par suite d'un impact de débris ingéré par exemple) une fuite pourrait être ingérée par la turbomachine et créer un feu interne qui pourrait se révéler catastrophique pour l'intégrité de cette dernière.
- Les turbines sont très sensibles en termes de rendements vis-à-vis des pertes de charge des entrées d'air et de leur échappement. L'introduction d'un échangeur dans le conduit d'entrée d'air de la turbomachine serait donc extrêmement pénalisante du point de vue rendement et performance globale de la chaîne de génération de puissance primaire.

Afin de traiter cette problématique, il est nécessaire d'introduire de nouvelles solutions et architectures permettant l'évacuation des calories générées par les systèmes vers l'environnement extérieur. Des systèmes de génération de débits d'air frais doivent ainsi être définis. Le document EP 3056423 A1 décrit un hélicoptère ayant deux moteurs principaux équipés d'un démarreur/générateur qui a besoin d'air frais pour refroidir son moteur électrique intégré en fonctionnement. En conséquence, chaque unité de démarreur/ générateur génère un flux d'air chaud en fonctionnement, qui doit être dissipé et est donc transféré vers un conduit d'air chaud. En outre, l'huile moteur associée à chacun des premier et deuxième moteurs principaux est chauffée lors du fonctionnement du moteur correspondant puis refroidie au moyen d'un échangeur de chaleur associé, qui refroidit l'huile moteur à l'aide d'un ventilateur.

### EXPOSE DE L'INVENTION REVENDIQUÉE

L'invention revendiquée est un dirigeable selon la revendication 1. D'autres caractéristiques optionnelles sont revendiquées dans les revendications dépendantes 2-16.

### EXPOSÉ DE LA DIVULGATION

Cet objectif est atteint avec un système pour gérer thermiquement une nacelle externe de production d'énergie électrique équipant un dirigeable à propulsion électrique, ladite nacelle comprenant des moyens de génération électrique et des équipements auxiliaires associés à ces moyens de génération électrique, ledit système de gestion thermique comprenant des moyens pour évacuer l'énergie thermique émise par lesdits moyens de production d'énergie électrique et les équipements auxiliaires dans l'environnement extérieur à ladite nacelle, lesdits moyens de génération électrique et lesdits équipements auxiliaires étant au moins en partie pourvus de moyens de refroidissement par circulation d'huile.

Les moyens d'évacuation thermique comprennent (i) un ou plusieurs échangeurs thermiques air-huile alimenté en air extérieur par des moyens de ventilation forcée et couplée auxdits moyens de refroidissement par circulation d'huile et (ii) des moyens de sortie de l'air chaud issu dudit ou desdits échangeurs thermiques air-huile vers l'extérieur de la nacelle.

Dans une version particulière, un échangeur thermique comporte une enceinte d'échange thermique contenant les moyens de génération électrique et/ou un ou plusieurs équipements auxiliaires associés.

Lorsque le système de gestion thermique est mis en œuvre dans une nacelle intégrant un turbogénérateur émettant des gaz de combustion via un conduit d'évacuation des gaz vers l'extérieur de la nacelle, les moyens de sortie d'air chaud entourent au moins en partie le conduit d'évacuation des gaz de combustion et comprennent une extrémité d'évacuation d'un mélange d'air de refroidissement et de gaz de combustion.

Le système de gestion thermique peut être mis en œuvre pour le refroidissement et la ventilation d'un système de pile à combustible et de ses équipements auxiliaires.

Suivant un autre aspect, il est proposé une nacelle externe de production d'énergie électrique équipant un dirigeable à propulsion électrique, comprenant des moyens de génération électrique et des équipements auxiliaires associés à ces moyens de génération électrique, intégrant un système de gestion thermique selon les exemples précédents, ce système de gestion thermique comprenant des moyens pour évacuer l'énergie thermique émise par lesdits moyens de production d'énergie électrique et les équipements auxiliaires dans l'environnement extérieur à ladite nacelle, lesdits moyens de génération électrique et lesdits équipements auxiliaires étant au moins en partie pourvus de moyens de refroidissement par circulation d'huile.

Les moyens d'évacuation thermique comprennent (i) un ou plusieurs échangeurs thermiques air-huile alimenté en air extérieur par des moyens de ventilation forcée disposés en aval de moyens d'entrée d'air et couplés auxdits moyens de refroidissement par circulation d'huile et (ii) des moyens de sortie de l'air chaud issu dudit ou desdits échangeurs thermiques air-huile vers l'extérieur de la nacelle via un conduit de sortie.

Lorsque la nacelle intègre un turbogénérateur couplé à une boîte de transmission de puissance pourvue d'un système de lubrification et à des équipements électriques de forte puissance, le système de gestion thermique est agencé pour procurer un refroidissement dudit système de lubrification.

Pour une nacelle dans laquelle les moyens de génération électrique et les équipements auxiliaires associés sont situés dans une pluralité de zones ségréguées requérant chacune une ventilation spécifique, le système de gestion thermique est agencé en une pluralité de sous-systèmes de gestion thermique procurant une ventilation et un refroidissement adaptés à chacune desdites zones ségréguées.

Un même sous-système de gestion thermique peut être agencé pour procurer une ventilation et un refroidissement adaptés à plusieurs zones ségréguées.

Une zone ségréguée peut par exemple inclure un turbogénérateur et être réalisée sous la forme d'un ensemble capot.

Cet ensemble capot peut présenter une partie inférieure adaptée à une fonction de drainage. L'ensemble capot peut présenter une partie adaptée à une fonction de ventilation naturelle.

L'ensemble capot peut comprendre une pluralité de capots épousant sensiblement la forme respective d'une pluralité d'éléments du turbogénérateur.

Les moyens d'entrée d'air peuvent comprendre un conduit coudé comprenant une première extrémité ouverte d'entrée d'air à l'extérieur de la nacelle et une seconde extrémité ouverte à l'extérieur de la nacelle.

Lorsque l'équipement concerné pour une ventilation et un refroidissement dans une zone non feu, les moyens d'entrée d'air peuvent aussi comprendre un conduit coudé comprenant une première extrémité ouverte d'entrée d'air à l'intérieur et une seconde extrémité ouverte à l'extérieur de la nacelle.

Si la nacelle intègre un turbogénérateur couplé à une boîte de transmission de puissance pourvue d'un système de lubrification et à des équipements électriques de forte puissance, ce turbogénérateur est situé dans une zone feu et est pourvu d'un sous-système de gestion thermique mettant en œuvre une trompe à jet (ou *eductor* en anglais) pour l'évacuation des gaz de combustion émis par la turbine du turbogénérateur.

Lorsque la nacelle comporte une coque (carénage) englobant les moyens de génération électrique et les équipements électriques associés, le ou les conduits d'entrée d'air et de sortie sont prévus pour traverser la coque.

Suivant l'invention, il est proposé un dirigeable à propulsion électrique équipé d'au moins deux nacelles externes de production d'énergie électrique selon la revendication 1. Ce dirigeable peut être du type à structure rigide, dédié au transport de charges lourdes et au transfert vertical *(hovering)* de ces charges.

### BREVE DESCRIPTION DES FIGURES

La figure 1 représente une vue latérale d'un exemple de réalisation d'un dirigeable équipé de deux nacelles de production d'énergie électrique.
La figure 2 est une vue en perspective de l'intérieur d'une nacelle de production d'énergie électrique selon l'invention.
La figure 3 illustre quatre principes fonctionnels de ventilation et de refroidissement pouvant être mis en œuvre dans le cadre de la présente invention.
La figure 4 est une vue en perspective d'un exemple de réalisation d'un système de gestion thermique selon l'invention mis en œuvre dans une nacelle de production d'énergie électrique selon l'invention.
La figure 5 est un schéma fonctionnel d'un exemple de réalisation d'un système de gestion thermique selon l'invention.
La figure 6 illustre une vue partielle d'un exemple de réalisation d'un système de gestion thermique selon l'invention.
La figure 7 est une vue latérale schématique de zones de sécurité au sein d'une nacelle de production d'énergie électrique selon l'invention.
La figure 8 est une vue de dessus schématique de zones de sécurité au sein d'une nacelle de production d'énergie électrique selon l'invention.
La figure 9 illustre un exemple de réalisation d'une intégration optimisée de la gestion thermique dans une nacelle d'un dirigeable.

### DESCRIPTION DETAILLEE

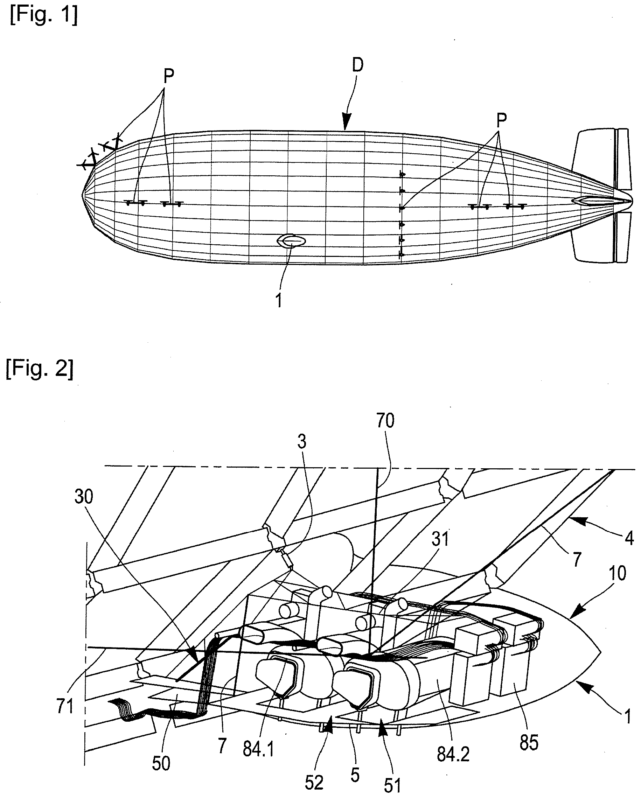

En référence à la figure 1, un dirigeable de structure rigide D comporte un ensemble de groupes propulseurs P alimentés en énergie électrique à partir de systèmes de production d'énergie électrique intégrés dans deux nacelles externes 1 en forme de nageoire (dont une seule est représentée sur la figure 1).

Une nacelle en forme de nageoire 1 comprend, en référence à la figure 2, une structure mécanique 30,32 réalisée à partir de treillis de poutres en matériau composite et recouverte d'une peau de coque ou de carénage 10. La partie supérieure 31 de la structure mécanique est reliée à un cadre 4 du corps principal du dirigeable via une interface mécanique 3 et trois câbles 7,70,71.

La nacelle 1 intègre deux groupes turbogénérateurs 84.1,84.2 montés suspendus à la partie supérieure 31 de la structure mécanique de la nacelle 1, un système de batteries de stockage 85, et un plancher 5.

Ce plancher 5 comprend une voie d'accès 50 depuis l'intérieur du dirigeable D dans la nacelle 1, et une partie de plancher 52 entourant les deux turbogénérateurs 84.1,84.2. Des parties évidées 51 sont ménagées dans le plancher 5 pour permettre une dépose des turbogénérateurs au moyen de treuils prévus sur la partie supérieure 31 de la structure mécanique.

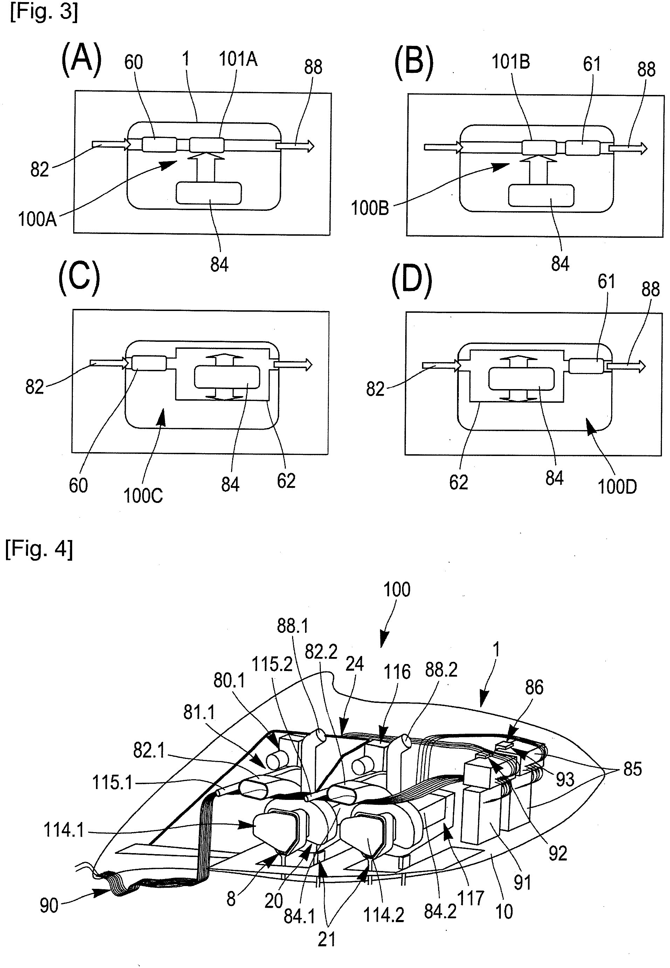

On va maintenant décrire, en référence à la figure 3, quatre principes fonctionnels de ventilation et de refroidissement pouvant être mis en œuvre dans le cadre d'un système de gestion thermique selon l'invention.

Selon un premier principe fonctionnel (A) correspondant à un échange forcé par surpression amont à l'échange calorifique ou thermique, le système de gestion thermique 100A disposé au sein de la nacelle 1 comprend un système 60 de génération de débit/pression d'air recevant de l'air frais à partir d'un conduit d'entrée d'air 82 et délivrant de l'air sous pression en entrée d'un système d'évacuation thermique 101A prévu pour extraire de l'énergie thermique hors d'un système émetteur thermique 84, en l'occurrence un turbogénérateur ou une pile à combustible. Le système d'évacuation thermique 101A émet un air chaud qui est évacué hors de la nacelle 1 via un conduit de sortie 88.

Selon un second principe fonctionnel (B) correspondant à un échange forcé par dépression aval à l'échange calorifique, le système de gestion thermique 100B disposé au sein de la nacelle 1 comprend un système d'évacuation thermique 101B couplé à un système émetteur thermique 84 et recevant en entrée un air frais de l'extérieur via un conduit d'entrée d'air 82. L'air chaud produit par le système d'évacuation thermique 101B est injecté en entrée d'un système 61 de génération de débit/dépression d'air qui délivre de l'air chaud d'évacuation vers l'extérieur de la nacelle 1 via un conduit de sortie 88.

Selon un troisième principe fonctionnel (C) correspondant à un échange en convection naturelle par génération de débit amont à l'enceinte d'échange calorifique ou thermique, le système de gestion thermique 100C comprend un système de génération de débit/pression d'air 60 injectant de l'air frais sous pression dans une enceinte d'échange thermique 62 englobant un système émetteur thermique 84 tel qu'un turbogénérateur ou une pile à combustible. L'énergie thermique émise par ce système émetteur thermique 84 est évacuée de l'enceinte d'échange thermique 62 dans l'air éjecté de cette enceinte vers l'extérieur de la nacelle 1 via un conduit d'air 88.

Selon un quatrième principe fonctionnel (D) correspondant à un échange en convection naturelle par génération de débit aval à l'enceinte d'échangé calorifique ou thermique, le système de gestion thermique 100D comprend une enceinte d'échange thermique 62 contenant un système émetteur thermique 84, tel qu'un turbogénérateur ou une pile à combustible, et recevant de l'air frais en entrée via un conduit d'entrée d'air 82 et injectant de l'air chaud issu de l'échange thermique dans un système 61 de génération de débit/pression d'air délivrant de l'air chaud via un conduit de sortie 88 vers l'extérieur.

On va maintenant décrire, en référence aux figures 4 à 9, un exemple de réalisation d'un système de gestion thermique selon l'invention, correspondant au premier principe fonctionnel (A) précédemment décrit mis en œuvre dans une nacelle intégrant deux turbogénérateurs et un générateur haute tension 20 NPES.

La nacelle 1 comprend deux turbogénérateurs 84.1,84.2 reliés en entrée à une ligne 24 d'alimentation en carburant et en sortie à un système de conversion d'énergie 85, à un système de batteries de stockage 92 et une nappe d'alimentation électrique haute tension 90 s'étendant au sein du dirigeable D pour alimenter les groupes de propulsion électrique.

Le système de gestion thermique 100 équipant la nacelle 1 intégrant les deux turbogénérateurs 84.1,84.2, comprend :
- deux conduits d'entrée d'air 81.1,81.2 de refroidissement des turbines intégrées dans les turbogénérateurs 84.1,84.2 ;
- deux ventilateurs 80.1,80.2 de refroidissement des turbines, disposés en aval des deux conduits d'entrée d'air 81.1,81.2 ;
- deux échangeurs thermiques 116 couplés aux deux turbogénérateurs 84.1,84.4 ;
- deux conduits d'entrée d'air 115.1,115.2 prévus pour le refroidissement des enceintes de capot avant 114.1,114.2 des turbogénérateurs 84.1,84.2 ;
- deux chambres plenum 82.1,82.2 reliées aux deux conduits d'entrée d'air 115.1,115.2 de refroidissement des capots avant 114.1,114.2 ;
- deux conduits 88.1,88.2 d'évacuation d'air et de gaz de combustion, de type « eductor ».

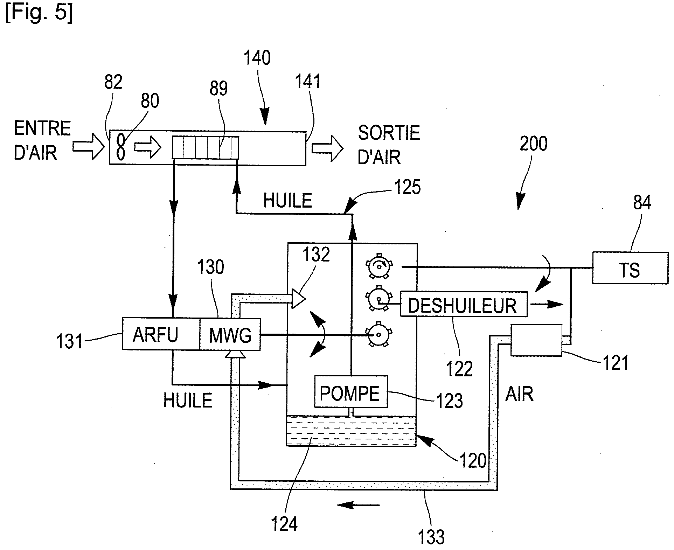

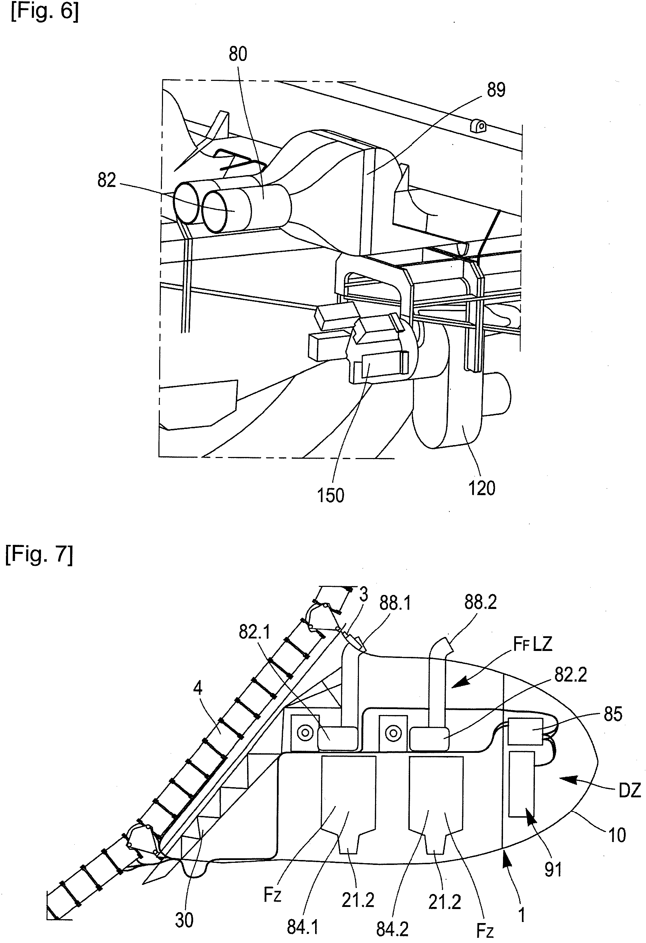

On va maintenant décrire, en référence aux figures 5 et 6, une application du système de gestion thermique selon l'invention pour le refroidissement d'un système de lubrification d'une boîte de transmission équipant un turbogénérateur intégré dans une nacelle de production d'énergie électrique selon l'invention.

Dans le système de gestion thermique 200, la boîte de transmission 120, couplée mécaniquement à l'arbre de la turbine 84 et l'arbre du générateur de puissance 130, comprend un réservoir d'huile 124 et une pompe à huile prévue pour injecter de l'huile sous pression dans un circuit 125 de refroidissement huile couplé thermiquement au circuit de refroidissement air 140 via un échangeur thermique 89.

Le circuit de refroidissement air 140 équipant la nacelle 1 comprend à une première extrémité une entrée d'air 92, un ventilateur 80 et à l'autre extrémité une sortie air 141.

Le circuit de refroidissement huile 125 relie la sortie de l'échangeur thermique air-huile 89 à l'entrée d'une unité de refroidissement 131 du générateur électrique 130. La sortie huile de l'unité de refroidissement 131 est reliée en entrée de la boîte de transmission.

Le système de gestion thermique 200 comprend en outre une unité de refroidissement air 121 entraînée par l'arbre de la turbine 84 et prévue pour refroidir la génératrice électrique 130 via un second circuit de refroidissement air 133. L'air sortant de la génératrice électrique 130 se retrouve dans la boîte de transmission 120 mélangé à de l'huile. Un circuit déshuileur 122 délivre de l'air en sortie de la boîte de transmission 120. Il est à noter que cet agencement peut permettre de refroidir d'autres équipements électriques 150 auxiliaires du turbogénérateur.

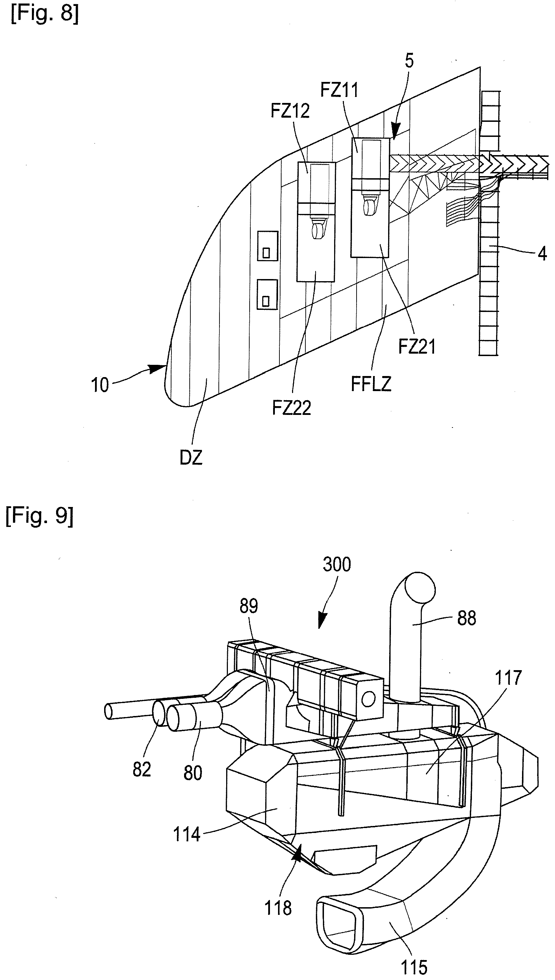

On va maintenant décrire, en référence aux figures 7 et 8, différentes zones de la nacelle 1.

La nacelle 1 comprend des zones dites DZ (sans fluides inflammables), FFLZ (Flammable Fluid Leakage Zone - Zones à risques de fuites de fluides inflammables) and FZ (Fire zones - dites zones feu) qui nécessitent une ventilation spécifique répondant aux critères de gestion des risques feu exigés de la part des autorités de certification aéronautiques civiles.

Les équipements électriques de conversion de puissance et les batteries de stockage sont disposés dans une zone sèche DZ, tandis que les turbogénérateurs 84.1,84.2 sont situés dans des zones feu FZ11,FZ12,FZ21,FZ22. La zone d'accès aux turbogénérateurs est une zone FFLZ.

Les zones sont ségréguées par des cloisons résistantes au feu ou par des zones étanches pour éviter la migration de fluides inflammables d'une zone à l'autre. La zone nacelle inclut donc différents systèmes de refroidissement et de ventilation en fonction des zones et des composants émetteurs de calories ou nécessitant une lubrification. Les arrangements de zones dépendent de la manière dont sont interconnectés les équipements et la nature même de la dangerosité des équipements concernés.

Il est possible de combiner certains systèmes de refroidissement avec ces besoins de ventilation pour générer les débits nécessaires. Pour la ventilation de la zone feu/turbogénérateur un système de ventilation passive appelé trompe à jet (ou eductor en anglais) peut être envisagé.

On peut prévoir, comme l'illustre la figure 9, une intégration optimisée de la gestion thermique dans une nacelle selon l'invention, entre le refroidissement et la ventilation du turbogénérateur, la boîte de transmission de puissance et les équipements électriques.

Dans cette configuration optimisée, le système de gestion thermique 300 selon l'invention comprend deux conduits d'entrée d'air 82 alimentant des ventilateurs 80 délivrant de l'air sous pression sur un échangeur thermique air-huile 89 prévu pour refroidir une boîte de transmission de puissance d'un turbogénérateur. La boîte de transmission et le turbogénérateur sont disposés dans une enceinte 118 comprenant un capot avant 114 et un capot arrière 117. Le système de gestion thermique comprend en outre un conduit 115 d'entrée d'air dans l'enceinte du turbogénérateur et un conduit 88 d'évacuation des gaz de combustion et de l'air chaud.

Bien sûr d'autres modes de réalisation d'un système de gestion thermique peuvent être envisagés sans sortir du cadre de la présente invention, qui est uniquement limitée par le jeu de revendications. En particulier, on peut prévoir des systèmes de génération électrique de puissance autres qu'un turbogénérateur.

## Revendications

1. Dirigeable à propulsion électrique équipé d'au moins deux nacelles externes de production d'énergie électrique,
les nacelles comprenant des moyens de génération électrique et des équipements auxiliaires associés à ces moyens de génération électrique, intégrant un système de gestion thermique,
ledit système de gestion thermique (100,100A-D,200,300) comprenant des moyens pour évacuer l'énergie thermique émise par lesdits moyens de génération d'énergie électrique et les équipements auxiliaires dans l'environnement extérieur à ladite nacelle, lesdits moyens de génération électrique et lesdits équipements auxiliaires étant au moins en partie pourvus de moyens de refroidissement par circulation d'huile,
les moyens d'évacuation thermique comprennant (i) un ou plusieurs échangeurs thermiques air-huile alimentés en air extérieur par des moyens de ventilation forcée disposés en aval de moyens d'entrée d'air et couplés auxdits moyens de refroidissement par circulation d'huile et (ii) des moyens de sortie de l'air chaud issu dudit ou desdits échangeurs thermiques air-huile vers l'extérieur de la nacelle via un conduit de sortie.

2. Dirigeable selon la revendication précédente, dans lequel un échangeur thermique comporte une enceinte d'échange thermique contenant les moyens de génération électrique et/ou un ou plusieurs équipements auxiliaires associés.

3. Dirigeable selon l'une des revendications précédentes, chaque nacelle intégrant un turbogénérateur émettant des gaz de combustion via un conduit d'évacuation des gaz vers l'extérieur de la nacelle et dans lequel les moyens de sortie d'air chaud entourent au moins en partie le conduit d'évacuation des gaz de combustion et comprennent une extrémité d'évacuation d'un mélange d'air de refroidissement et de gaz de combustion.

4. Dirigeable selon l'une des revendications précédentes, dans lequel les moyens de génération électrique sont un système de pile à combustible.

5. Dirigeable selon la revendication précédente, intégrant un turbogénérateur couplé à une boîte de transmission de puissance pourvue d'un système de lubrification et à des équipements électriques de forte puissance, dans lequel le système de gestion thermique est agencé pour procurer un refroidissement dudit système de lubrification.

6. Dirigeable selon l'une des deux revendications précédentes, dans lequel les moyens de génération électrique et les équipements auxiliaires associés sont situés dans une pluralité de zones ségréguées requérant chacune une ventilation spécifique, le système de gestion thermique étant agencé en une pluralité de sous-systèmes de gestion thermique procurant une ventilation et un refroidissement adaptés à chacune desdites zones ségréguées.

7. Dirigeable selon la revendication précédente, dans lequel un même sous-système de gestion thermique est agencé pour procurer une ventilation et un refroidissement adaptés à plusieurs zones ségréguées.

8. Dirigeable selon l'une des deux revendications précédentes, dans lequel une zone ségréguée inclut un turbogénérateur et est réalisée sous la forme d'un ensemble capot.

9. Dirigeable selon la revendication précédente, dans lequel l'ensemble capot présente une partie inférieure adaptée à une fonction de drainage. 15

10. Dirigeable selon la revendication précédente, dans lequel l'ensemble capot présente une partie adaptée à une fonction de ventilation naturelle.

11. Dirigeable selon l'une des deux revendications précédentes, dans lequel l'ensemble capot comprend une pluralité de capots épousant sensiblement la forme respective d'une pluralité d'éléments du turbogénérateur.

12. Dirigeable selon l'une quelconque des revendications 1 à 11, dans lequel que les moyens d'entrée d'air comprennent un conduit coudé comprenant une première extrémité ouverte d'entrée d'air à l'extérieur de la nacelle et une seconde extrémité ouverte à l'extérieur de la nacelle.

13. Dirigeable selon l'une quelconque des revendications 1 à 11, dans lequel que les moyens d'entrée d'air comprennent un conduit coudé comprenant une première extrémité ouverte d'entrée d'air à l'intérieur et une seconde extrémité ouverte à l'extérieur de la nacelle.

14. Dirigeable selon l'une des revendications 1 à 13, intégrant un turbogénérateur couplé à une boîte de transmission de puissance pourvue d'un système de lubrification et à des équipements électriques de forte puissance, dans laquelle le turbogénérateur est situé dans une zone feu et est pourvu d'un sous-système de gestion thermique mettant en œuvre une trompe à jet pour l'évacuation des gaz de combustion émis par la turbine du turbogénérateur.

15. Dirigeable selon l'une quelconque des revendications précédentes, comportant une coque englobant les moyens de génération électrique et les équipements électriques associés, **caractérisée en ce que** le ou les conduits d'entrée d'air et de sortie sont prévus pour traverser la coque.

16. Dirigeable selon l'une quelconque des revendications précédentes, du type à structure rigide, dédié au transport de charges lourdes et au transfert vertical de ces charges.

## Patentansprüche

1. Elektrisch angetriebenes Luftschiff, ausgestattet mit mindestens zwei externen stromerzeugenden Gondeln,
wobei die Gondeln Stromgenerierungsmittel und diesen Stromgenerierungsmitteln zugehörige Hilfseinrichtungen, einschließlich eines Wärmeverwaltungssystems, umfassen,
wobei das Wärmeverwaltungssystem (100, 100A-D, 200, 300) Mittel zum Ableiten der von den Stromgenerierungsmitteln und den Hilfseinrichtungen abgegebenen Wärmeenergie in die Umgebung außerhalb der Gondel umfasst, wobei die Stromgenerierungsmittel und die Hilfseinrichtungen mindestens teilweise mit Mitteln zum Kühlen durch Ölzirkulation versehen sind,
wobei die Wärmeableitungsmittel (i) einen oder mehrere Luft-Öl-Wärmetauscher, die durch Zwangsbelüftungsmittel, die stromabwärts von Lufteinlassmitteln angeordnet und mit den Mitteln zum Kühlen durch Ölzirkulation gekoppelt sind, mit Außenluft versorgt werden, und (ii) Mittel zum Ableiten der aus dem oder den Luft-Öl-Wärmetauschern austretenden Warmluft über einen Auslasskanal aus der Gondel umfassen.

2. Luftschiff nach dem vorstehenden Anspruch, wobei ein Wärmetauscher eine Wärmetauschkammer aufweist, die die Stromgenerierungsmittel und/oder ein oder mehrere zugehörige Hilfseinrichtungen enthält.

3. Luftschiff nach einem der vorstehenden Ansprüche, wobei jede Gondel einen Turbogenerator einschließt, der Verbrennungsgase über eine Abgasleitung nach außerhalb der Gondel abgibt, und wobei die Heißluftauslassmittel die Abgasleitung mindestens teilweise umgeben und ein Auslassende für ein Gemisch aus Kühlluft und Verbrennungsgasen umfassen.

4. Luftschiff nach einem der vorstehenden Ansprüche, wobei die Stromgenerierungsmittel ein Brennstoffzellsystem sind.

5. Luftschiff nach dem vorstehenden Anspruch, einschließlich eines Turbogenerators, der mit einem Getriebe mit Schmiersystem und elektrischen Hochleistungseinrichtungen gekoppelt ist, wobei das Wärmeverwaltungssystem so angeordnet ist, dass es eine Kühlung des Schmiersystems bereitstellt.

6. Luftschiff nach einem der beiden vorstehenden Ansprüche, wobei sich die Stromgenerierungsmittel und die zugehörigen Hilfseinrichtungen in einer Vielzahl von getrennten Bereichen befinden, die jeweils eine spezifische Belüftung erfordern, wobei das Wärmeverwaltungssystem in einer Vielzahl von Wärmeverwaltungs-Teilsystemen angeordnet ist, die eine für jeden der getrennten Bereiche angepasste Belüftung und Kühlung bereitstellen.

7. Luftschiff nach dem vorstehenden Anspruch, wobei ein und dasselbe Wärmeverwaltungs-Teilsystem so angeordnet ist, dass es eine Belüftung und Kühlung bereitstellt, die an mehrere getrennte Bereiche angepasst sind.

8. Luftschiff nach einem der beiden vorstehenden Ansprüche, wobei ein getrennter Bereich einen Turbogenerator aufnimmt und in Form einer Haubenanordnung ausgebildet ist.

9. Luftschiff nach dem vorstehenden Anspruch, wobei die Haubenanordnung einen unteren Teil aufweist, der für eine Entwässerungsfunktion angepasst ist.

10. Luftschiff nach dem vorstehenden Anspruch, wobei die Haubenanordnung einen Teil aufweist, der für eine natürliche Belüftungsfunktion angepasst ist.

11. Luftschiff nach einem der beiden vorstehenden Ansprüche, wobei die Haubenanordnung eine Vielzahl von Hauben umfasst, die im Wesentlichen der jeweiligen Form einer Vielzahl von Elementen des Turbogenerators entsprechen.

12. Luftschiff nach einem der Ansprüche 1 bis 11, wobei die Lufteinlassmittel einen gekrümmten Kanal umfassen, der ein erstes offenes Lufteinlassende außerhalb der Gondel und ein zweites offenes Ende außerhalb der Gondel umfasst.

13. Luftschiff nach einem der Ansprüche 1 bis 11, wobei die Lufteinlassmittel einen gekrümmten Kanal umfassen, der ein erstes offenes Lufteinlassende innerhalb der Gondel und ein zweites offenes Ende außerhalb der Gondel aufweist.

14. Luftschiff nach einem der Ansprüche 1 bis 13, einschließlich eines Turbogenerators, der mit einem Getriebe mit Schmiersystem und elektrischen Hochleistungseinrichtungen gekoppelt ist, wobei sich der Turbogenerator in einem Brandbereich befindet und mit einem Wärmeverwaltungs-Teilsystem versehen ist, das eine Düse zum Ableiten der von der Turbine des Turbogenerators ausgestoßenen Verbrennungsgase einsetzt.

15. Luftschiff nach einem der vorstehenden Ansprüche, mit einem Rumpf, der die Stromgenerierungsmittel und die zugehörigen elektrischen Einrichtungen umfasst, **dadurch gekennzeichnet, dass** die Lufteinlass- und -auslasskanäle so vorgesehen sind, dass sie den Rumpf durchqueren.

16. Luftschiff nach einem der vorstehenden Ansprüche, vom Typ mit starrer Struktur, zum Transportieren schwerer Lasten und zum vertikalen Bewegen dieser Lasten.

## Claims

1. Electrically propelled airship equipped with at least two external nacelles for generating electrical energy,
the nacelles comprising electrical generation means and auxiliary equipment associated with these electrical generation means, incorporating a thermal management system,
said thermal management system (100,100A-D,200,300) comprising means for discharging thermal energy emitted by said electrical generation means and auxiliary equipment into the environment external to said nacelle, said electrical generation means and said auxiliary equipment being at least partly fitted with oil circulation cooling means,
the thermal discharge means comprising (i) one or a plurality of air-oil heat exchangers supplied with outside air by forced ventilation means, which are arranged downstream of air inlet means and coupled to said oil circulation cooling means, and (ii) means for releasing hot air from said air-oil heat exchanger(s) to the outside of the nacelle via an outlet duct.

2. Airship according to the preceding claim, wherein a heat exchanger comprises a heat exchange chamber containing the electrical generation means and/or one or a plurality of associated auxiliary equipment.

3. Airship according to either of the preceding claims, each nacelle incorporating a turbogenerator which emits combustion gases to the outside of the nacelle via a gas discharge duct and wherein which the means for releasing hot air at least partly surround the combustion gas discharge duct and comprise an end for discharging a mixture of cooling air and combustion gases.

4. Airship according to any of the preceding claims, wherein the electrical generation means are a fuel cell system.

5. Airship according to the preceding claim, incorporating a turbogenerator coupled to a power transmission gearbox, fitted with a lubrication system, and to high-power electrical equipment, wherein the thermal management system is arranged to provide cooling of said lubrication system.

6. Airship according to either of the two preceding claims, the electrical generation means and the associated auxiliary equipment being located in a plurality of segregated zones, each requiring a specific ventilation, the thermal management system being arranged in a plurality of thermal management subsystems that provide ventilation and cooling adapted to each of said segregated zones.

7. Airship according to the preceding claim, a single thermal management subsystem being arranged to provide ventilation and cooling adapted to a plurality of segregated zones.

8. Airship according to either of the two preceding claims, wherein a segregated zone includes a turbogenerator and is in the form of a cover assembly.

9. Airship according to the preceding claim, wherein the cover assembly has a lower portion adapted to a drainage function.

10. Airship according to the preceding claim, wherein the cover assembly has a portion adapted to a natural ventilation function.

11. Airship according to either of the two preceding claims, wherein the cover assembly comprises a plurality of covers substantially conforming to the corresponding shape of a plurality of elements of the turbogenerator.

12. Airship according to any of claims 1 to 11, wherein the air inlet means comprise an elbowed duct which comprises a first air inlet end open to the outside of the nacelle and a second end open to the outside of the nacelle.

13. Airship according to any of claims 1 to 11, wherein the air inlet means comprise an elbowed duct which comprises a first air inlet end open to the inside and a second end open to the outside of the nacelle.

14. Airship according to any of claims 1 to 13, integrating a turbogenerator coupled to a power transmission gearbox, fitted with a lubrication system, and to high-power electrical equipment, wherein the turbogenerator is located in a fire zone and is fitted with a thermal management subsystem which operates an eductor for discharging combustion gases emitted by the turbine of the turbogenerator.

15. Airship according to any of the preceding claims, comprising a shell enclosing the electrical generation means and the associated electrical equipment, **characterized in that** the air inlet and outlet duct(s) are intended to pass through the shell.

16. Airship according to any of the preceding claims, of the rigid-structure type, dedicated to transporting heavy loads and to vertically transferring these loads.
